# EUROPEAN PATENT APPLICATION

(11) **EP 4 644 751 A1**
(43) Date of publication of application: **05.11.2025**
(21) Application number: 24173392.2
(22) Date of filing: 30.04.2024
(51) Int. Cl.: F16L 3/137, F16L 55/035

(54) **CLIP**

(71) Applicant: Volvo Car Corporation, 405 31 Göteborg (SE)
(72) Inventor: Dickson, Fredrik, 44497 Svenshögen (SE)
(74) Representative: Nederlandsch Octrooibureau

(57) **Abstract**

A clip comprises a plastic portion comprising an elongate body with a head, the head with a first side connected to the elongate body and second side; and a connection portion connected to the second side of the head. The connection portion comprises a through-hole and is formed of an elastic material.

## Description

### Technical Field

The present disclosure relates generally to clips for attaching two components.

### Background

In a vehicle, hoses or pipes, for example, in the cooling or braking systems, typically need to be secured with clips or clamps to the frame, vehicle body or another component. Such clamps can clamp around the hose and then connect it to, for example, the vehicle body. Clips could also connect around the hose or could connect to another part which extends around the hose and attach that to the vehicle body. Such clips or clamps are typically molded plastic materials. Prior art hoses or pipes were typically formed of rubber or similar elastic materials which would help to absorb sound or vibrations from the hoses.

### Summary of Invention

According to a first aspect, a clip comprises a plastic portion comprising an elongate body with a head, the head with a first side connected to the elongate body and second side; and a connection portion connected to the second side of the head, the connection portion comprising a through-hole and formed of an elastic material. Such a clip can form an effective and secure way of connecting a hose to another component (e.g., a frame or vehicle body) while also providing sounds and vibration reducing effects through the elastic connection portion. The plastic portion provides for a secure connection to another component.

According to an embodiment, the connection portion comprises a base portion connected to the head, opposing side portions extending on sides of the through-hole and a top portion connecting to each of the opposing side portions. Optionally, the connection portion comprises one or more ribs on an upper side of the top portion. Such a configuration can help provide for damping of any sound and vibration by absorbing sounds and/or vibrations through the flexibility and materials of the connection portion. While connection portion is able to flex with any movement or forces, it can also help to ensure that any hose to which it is connected does not come into contact with the plastic portions of clip (or the frame or other feature to which clip connects), thereby preventing sound transmission between the two. One or more ribs on an upper side of the top portion help to ensure that the hose stays connected to the clip and does not move or slide through.

According to an embodiment, the connection portion further comprises first and second shoulders extending outward from each opposing side portion. Optionally, the first shoulder comprises a first through-hole and the second shoulder comprises a second through-hole. Further optionally, the top portion extends further in length than the base portion, for example, along the direction which the hose to which the clip will connect will extend. Such a configuration with shoulders and through-holes or other cut-outs can provide further damping forces for movement and/or vibration. The extension further in length than the base portion (along the direction of the hose) helps to ensure the hose will not come into contact with the plastic portions, thereby helping to avoid sound transmissions between relatively stiff parts, especially when the hose is plastic.

According to an embodiment, the plastic portion is at least partially formed of polyamide. Forming at least partly out of polyamide can provide a strong and secure connecting portion for the clip.

According to an embodiment, the connection portion is formed of one or more of the following materials: rubber, thermoplastic elastomer, thermoplastic polyurethane. Such materials in the connection portion provide damping and noise and vibration reduction characteristics in the clip while still maintaining a strong connection.

According to an embodiment, the plastic portion and the connection portion are integrally formed. For example, the clip could be formed in a two-step injection moulding process. First, the plastic portion could be formed, and next the connection portion could be overmoulded. Other methods could have a reverse order and/or could be formed in a different manner. In some cases, the parts could be formed separately and then joined together, for example, through adhesive.

According to an embodiment, the elongate body comprises one or more fixation features. Optionally, the head comprises an umbrella flange. Such fixation features could be, for example, rings, ribs or teeth, which could be connected on one or more sides of the elongate body, and in some cases could be angled to serve as gripping features once the clip is inserted into a fixing hole or position. For example, such features could be angled toward the head and able to flatten or depress when the clip is pushed in a direction toward the end of the elongate body (away from the head), but provide a staying or gripping force when pulled in the opposite direction (toward the head) to ensure the clip does not back out once inserted in a hole. An umbrella flange can help ensure the clip is not over-inserted, and provides additional space between the hose and the frame (or other feature to which the clip is connected) to further ensure that the hose does not contact the frame in use, thereby preventing direct transfer of sound and vibrations.

According to a further aspect, a clip and tie assembly comprises a clip as previously discussed; and a tie extending through the through-hole. Such a clip and tie assembly provides a simple and secure way of connecting a hose or other part to a frame (or other fixed feature) in a way in which sound and vibrations are dampened or reduced.

According to another aspect, a hose assembly comprises a hose; and one or more clip and tie assemblies as previously described. A tie of each of the one or more clip and tie assemblies extends around the hose. Such an assembly provides a hose that can easily and quickly be secured in an engine or other assembly in a way in which sound and vibration transmission is minimized. The one or more clip and tie assemblies can be connected to the hose at another location, and then the hose includes all connection parts needed for connection when it arrives to the site of manufacture. This can result in a faster connection of the hose to the other system (e.g., engine) for an overall faster assembly process. The elongate body of each of the one or more clips can simply be connected to a frame or other fixture (e.g., by pushing into the hole), and ties can be secured or pulled tight around hose to attached a part of the hose securely to the connection portion of each of the one or more clips.

According to a further aspect, a method of forming a clip comprises forming a plastic portion comprising an elongate body with a head, the head with a first side connected to the elongate body and a second side; and connecting a connection portion to the second side of the head, wherein the connection portion is formed of an elastic material and comprises a through-hole. Optionally, the step of forming a plastic portion comprises moulding the plastic portion and the step of connecting a connection portion to the second side of the head comprises moulding the connection portion to the second side of the head. Forming the plastic portion and connection portion integrally in a two-step injection molding process provides a strong clip despite forming different parts of different materials. In other embodiments, the portions could be formed separately and then joined (e.g., adhered) together.

The person skilled in the art will understand that the features described above may be combined in any way deemed useful. Moreover, modifications and variations described in respect of the system may likewise be applied to a method.

### Brief Description of Drawings

Figure 1A illustrates a front perspective view of a clip with tie;
Figure 1B illustrates a side view of the clip with tie of Fig. 1A;
Figure 2 illustrates a perspective view of a second embodiment of a clip; and
Figure 3 illustrates a perspective view of a clip with tie securing a hose to another component.

### Description of Embodiments

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

The term "vehicle" as used herein refers to a thing used for transporting people or goods. Automobiles, cars, trucks, or buses etc. are examples of vehicles. The vehicle could be an "electric vehicle (EV)", powered by an electric motor that draws current from an on-vehicle energy storage device, such as a battery, which is rechargeable from an off-vehicle source, such as residential or public electric service or an on-vehicle fuel powered generator. The vehicle may be two or more wheeled vehicles manufactured for use primarily on public streets, roads.

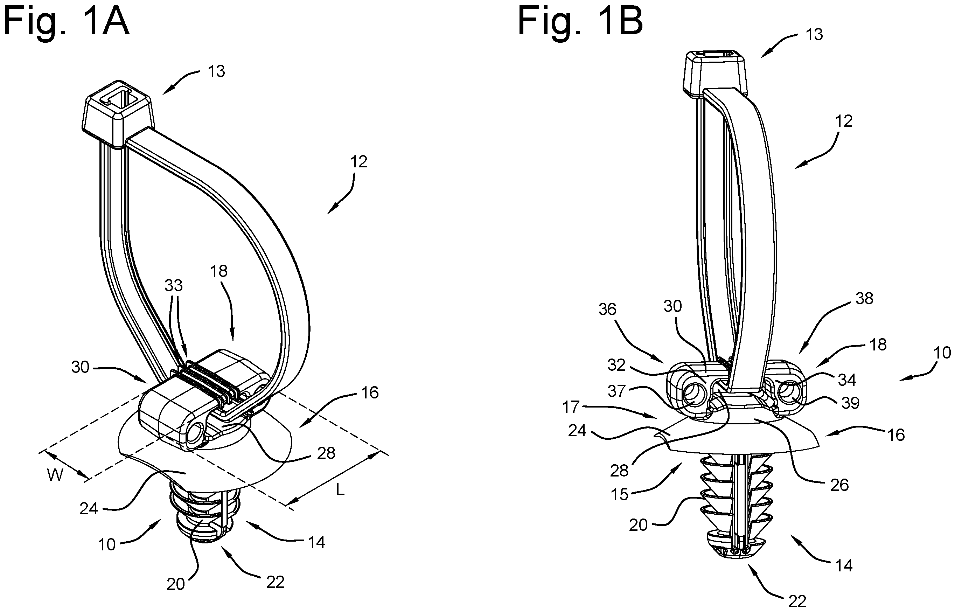

Figure 1A illustrates a front perspective view of a clip 10 with tie 12; and Figure 1B illustrates a side view of clip 10.

Clip 10 comprises elongate body 14, head 16 (with first side 15 and second side 17), and connection portion 18. Elongate body 14 can comprise additional fixation features such as ribs 20 (or could have another configuration such as teeth). Elongate body extends from a first end 22, which could be pointed, to a second end which connects to first side 15 of head 16. Head 16 comprises flange 24, which is in this embodiment umbrella shaped though could have another configuration in other embodiments (e.g., straight).

Connection portion 18 comprises base portion 26, central through-hole 28, top portion 30, first side portion 32, second side portion 34, first shoulder 36 with through-hole 37, second shoulder 38 with through-hole 39. Top portion 30 comprises ribs 33 on the upper side and has a length L and a width W. While three ribs are shown, other embodiments could have more or fewer ribs. Central through-hole 28 is sufficiently sized to receive tie 12, and can extend, for example, to the edges of base portion 26 and first and second side portions 32, 34, as shown in Figs. 1A-1B. Additionally, the configuration (e.g., with extra cut-out portions at the side-portion and base portion 26 connections) can help to give further flexibility and absorb vibrations.

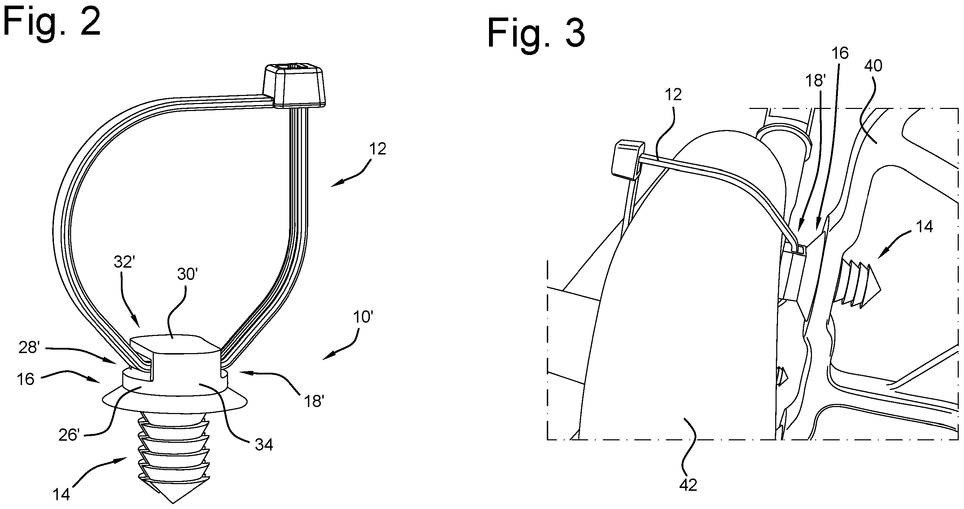

First shoulder 36 and second shoulder 38 extend from first side portion 32 and second side portion 34, respectively, extending further than base portion 26. This provides connection portion 18 top portion 30 with a length L which is largerthan the width W. Length L can extend along the same general axis as a central axis of a hose (or pipe or tube) around which tie 12 will extend (see Fig. 3). This helps to ensure that no part of the hose will contact head 16, and hose only contacts connection portion 18 (formed of elastic material), even when moving or vibrating. Each of first shoulder 36 and second shoulder 38 includes a through-hole 37, 39 extending through the width W of connection portion 18. In the embodiment shown, each through-hole 37, 39 is a circle, but through-holes could have different shapes in other embodiments. Some embodiments may not include through-hole in shoulders 36, 38 or could have more than one through-hole. Connection portion 18 has generally rounded edges and corners. Connection portion 18 is formed of a flexible material, for example, rubber, thermoplastic elastomer, thermoplastic polyurethane, etc.

Tie 12 is an example of a connection device which can be used to connect a hose to clip 10. Tie 12 (or other connection device) configuration could vary in different embodiments. Tie 12 extends through central through-hole 28 in connection portion 18 and extends around the hose (see Fig. 3) to secure the two parts. In Figs. 1A-1B and 3, tie 12 is shown as a zip-tie, a plastic strip that can be threaded through its end 13 and adjustably tightened to fasten around and secure to different sizes of hoses.

Figure 2 illustrates a perspective view of a second embodiment of a clip 10' with a tie 12. Clip 10' includes the same elongate body 14 and head 16 as clip 10 of Figs. 1A-1B, but connection portion 18' differs from that of clip 10.

In the embodiment of Fig. 2, connection portion 18' does not include shoulders 36, 38, and only has base portion 26', central through-hold 28', top portion 30' and first and second side portions 32', 34'. Base portion 26' is generally circular, and top portion 30' is a similar circular shape with a front and back portion cut off at the openings of through-hole 28'. As in clip 10, connection portion 18' is formed of flexible material, for example, rubber, thermoplastic elastomer, thermoplastic polyurethane, etc.

Each of clips 10, 10' can be formed by two stage injection moulding, for example, first molding the elongated body 14 and head 16. Next, connection portion 18, 18' could be injection molded or overmoulded as a second stage. Such a process can ensure a very secure and stable clip despite forming of two different materials.

Figure 3 illustrates a perspective view of a clip with tie 12 securing a hose 42 to a frame 40 forming a part of a vehicle body (e.g., brake pipes secured to a frame). While clip 10' is shown, clip 10 (or another configuration) could also be used, and Fig. 3 is an example to show a clip in use. In other embodiments, the clip could be hanging from an upper frame or otherwise arranged.

Tie 12 extends through through-hole 28 of connection portion 18' of clip 10' and around hose 42. Clip 10' and tie 12 could be connected to hose 42 at any time, for example, just after manufacture and/or before shipping to the assembly location. This can allow for hose 42 to include all the connection parts needed for installation as shipped, thereby only needing an assembler to connect clips 10, 10' to a frame 40 or body and possibly tighten ties 12, not needing to bring or connect additional parts when installing and securing hose 42.

For connection, elongate body 14 is pushed through a hole (not shown) in frame 40. The hole is sized to receive clip 10'. Ribs 20 of elongate body 14 depress toward head 16 to allow for at least part of elongate body 14 to extend through the hole, and ribs 20 then flex back out once they have gone through the hole to grip around the hole and ensure clip 10' cannot back out of the hole in frame 40. Head 16 (and particularly flange 24) is sized to be larger than the hole, ensuring head 16 does not fit through the hole in frame 40, and instead contacts frame 40 around the hole. Tie 12 extends through central through-hole 28 in connection portion 18' and around hose 42 to secure hose 42 to clip 10'. Hose 42 contacts an upper side of top portion 30' of connection portion 18' (and ribs on the upper side, if any).

In use, hose 42 (and other parts of the engine) are subject to movement and vibrations. During operations of the vehicle, hose 42 will move around and can transfer sound and/or vibrations from the hose 42 movement or liquid movement through the hose to the frame 40 and/or vehicle body. This is especially true when hose 42 is formed of plastic or harder materials.

As mentioned above, prior art hoses were typically made of rubber, which would help to absorb any sound or vibrations within the system. However, the use of plastic hoses is desirable to reduce weight and due to the better recyclability of plastic. Yet, plastic hoses or pipes transport sound and vibrations more, which can then be transported to the vehicle body through the clips or clamps.

Clip 10, 10' can help to reduce the transfer of sound and vibrations, even from plastic hoses through connection portion 18, 18' formed of a flexible or elastic material. Because hose 42 contacts only connection portion 18, 18' of clip 10, 10' in use (even when moving around or vibrating), connection portion 18, 18' is able to dampen, reduce or absorb the vibrations or sound, and such vibrations and sound are not transferred to the harder parts of clip 10, 10' (head 16 and elongate body 14) or frame 40. The configuration of connection portion 18, 18' with a central through-hole (and an extended length and shoulders 36, 38 with through-holes in clip 10) also helps to avoid any contact between pipe 42 and head 16 of clip or frame 40, thereby reducing or eliminating transmission of vibration and sounds from hose 42 to the vehicle body. Such a configuration has been shown to have a dynamic stiffness around 5-10 N/mm as compared to a dynamic stiffness of 100 N/mm for the prior art fully plastic clips. This configuration and dynamic stiffness is especially useful when using hoses made of plastic, which is desirable for reduced weight (as compared to rubber hoses or clamps with damping layers) and recyclability. The configurations of through-holes, as well as ribs on top portion can help to secure hose 42 to clip 10, 10', and to receive and dampen movements and vibrations.

Clip 10, 10' with tie 12 also takes very little space for securing hoses 42, thereby providing effective hose attachment which can reduce noise, vibration and harshness in a compact package. The plastic portions (elongate body 14 and head 16) provide secure attaching components in a compact package. The small and compact clip 10, 10' is lighter and smaller than prior art clips (which required clamping around the hose with vibration reducing material in between) and the incorporation of a sound and vibration absorber (as connection portion) directly into the clip 10, 10' enables the use of plastic pipes in systems subject to vibrations and noise, such as in engines of a vehicle. Thus, forming clip 10, 10' with plastic and elastic components provides a small yet secure connector which is able to help reduce sound and vibration transmission.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims .

## Claims

1. A clip (10, 10') comprising:
a plastic portion comprising an elongate body (14) with a head (16), the head (16) with a first side connected to the elongate body and second side; and
a connection portion (18, 18') connected to the second side of the head, the connection portion (18, 18') comprising a through-hole (28, 28') and formed of an elastic material.

2. The clip (10, 10') of claim 1, wherein the connection portion (18, 18') comprises a base portion (26) connected to the head (16), opposing side portions (32, 34) extending on sides of the through-hole (28, 28') and a top portion (30) connecting to each of the opposing side portions (32, 34).

3. The clip (10, 10') of claim 2, wherein the connection portion (18, 18') comprises one or more ribs (33) on an upper side of the top portion (30).

4. The clip (10, 10') of any of claims 2-3, wherein the connection portion (18, 18') further comprises first and second shoulders (36, 38) extending outward from each opposing side portion.

5. The clip (10, 10') of claim 4, wherein the first shoulder (36) comprises a first through-hole (37) and the second shoulder (38) comprises a second through-hole (39).

6. The clip (10, 10') of any of claims 2-5, wherein the top portion (30) extends further in length than the base portion (26).

7. The clip (10, 10') of any of the preceding claims, wherein the plastic portion is at least partially formed of polyamide.

8. The clip (10, 10') of any of the preceding claims, wherein the connection portion (18, 18') is formed of one or more of the following materials: rubber, thermoplastic elastomer, thermoplastic polyurethane.

9. The clip (10, 10') of any of the preceding claims, wherein the plastic portion and the connection portion (18, 18') are integrally formed.

10. The clip (10, 10') of any of the preceding claims, wherein the elongate body (14) comprises one or more fixation features (20).

11. The clip (10, 10') of any of the preceding claims, wherein the head (16) comprises an umbrella flange (24).

12. A clip (10, 10') and tie assembly comprising:
a clip (10, 10') according to any of the preceding claims; and
a tie (12) extending through the through-hole (28, 28').

13. A hose assembly comprising:
a hose (42); and
one or more clip (10, 10') and tie (12) assemblies according to claim 12, wherein a tie (12) of each of the one or more clip and tie assemblies extends around the hose (42).

14. A method of forming a clip (10, 10'), the method comprising:
forming a plastic portion comprising an elongate body (14) with a head (16), the head with a first side (15) connected to the elongate body (14) and a second side (17); and
connecting a connection portion (18, 18') to the second side (17) of the head (16), wherein the connection portion (18, 18') is formed of an elastic material and comprises a through-hole (28, 28').

15. The method of claim 14, wherein the step of forming a plastic portion comprises moulding the plastic portion and the step of connecting a connection portion (18, 18') to the second side of the head (16) comprises moulding the connection portion (18, 18') to the second side of the head (16).
